# EUROPÄISCHE PATENTSCHRIFT

(11) **EP 3 872 941 B1**
(45) Veröffentlichungstag und Bekanntmachung des Hinweises auf die Patenterteilung: **06.09.2023**
(21) Anmeldenummer: 21154083.6
(22) Anmeldetag: 28.01.2021
(51) Int. Cl.: H02B 11/28, H02B 11/10

(54) **BEDIENEINHEIT FÜR EINEN ERDUNGSSCHALTERANTRIEB EINER LUFTISOLIERTEN SCHALTANLAGE**
OPERATING UNIT FOR AN EARTHING SWITCH OF AN AIR-INSULATED SWITCHGEAR
UNITÉ DE COMMANDE POUR UN SECTIONNEUR DE TERRE D'UNE INSTALLATION DE COMMUTATION ISOLÉE PAR AIR

(30) Priorität: 28.02.2020 DE 102020202595
(43) Veröffentlichungstag der Anmeldung: 01.09.2021
(73) Patentinhaber: Siemens Aktiengesellschaft, 80333 München (DE)
(72) Erfinder: Karadeniz, Tahsin, 41400 Gebze-Kocaeli (TR); Sakaci, Egemen Aslan, 34870 Karliktepe Mah. KARTAL / ISTANBUL (TR)
(74) Vertreter: Siemens Patent Attorneys

(56) Entgegenhaltungen:
- EP-A1- 2 787 519
- WO-A1-2008/087723
- AT-B- 271 612
- DE-U1- 9 014 832
- DE-U1- 29 904 223

## Beschreibung

### Technisches Gebiet

Die Erfindung betrifft eine Bedieneinheit für einen Erdungsschalterantrieb einer luftisolierten Schaltanlage und eine luftisolierte Schaltanlage mit einer solchen Bedieneinheit.

### Technischer Hintergrund

Luft- und gasisolierte Schaltanlagen werden für die Verteilung und das Schalten von Spannungen verwendet. Hierbei kommen meistens Spannungen im sogenannten Mittelspannungsbereich zur Anwendung, der von 1kV bis 52kV Volt reicht. Als luftisolierte Schaltanlagen werden solche Anlagen bezeichnet, bei denen die wesentlichen Komponenten von gewöhnlicher Luft umgeben sind, so dass es keiner Gasabdichtung bedarf. Nur der eigentliche Schaltvorgang selbst wird in Vakuumröhren ausgeführt, um die Entstehung von Lichtbögen während eines Schaltvorgangs möglichst zu unterdrücken.

Wird ein Abschnitt eines Mittelspannungsnetzes außer Betrieb genommen, etwa um Wartungsarbeiten durchzuführen, werden üblicherweise zuerst die Vakuumröhren in eine offene Schalterstellung überführt. Um das Überspringen von Elektrizität über die verhältnismäßig kurze Trennstrecke der Vakuumröhren zu verhindern, wird anschließend ein mit den Vakuumröhren elektrisch in Reihe liegender Trennschalter geöffnet, der eine verhältnismäßig große Trennstrecke bereitstellt. Als dritter und abschließender Schritt wird der derart abgetrennte Leitungsabschnitt geerdet, indem ein Erdungsschalter geschlossen wird. Dadurch wird die Entstehung einer gefährlichen Spannung aufgrund von während des Betriebs entstandenen Raumladungen verhindert, so dass eine gefahrlose Arbeit an dem abgetrennten Leitungsabschnitt möglich ist. Der Leitungsabschnitt kann eine Sammelschiene der luftisolierten Schaltanlage oder aber auch ein mit der luftisolierten Schaltanlage verbundenes Erdkabel sein.

Bei erneuter Inbetriebnahme des abgetrennten Leitungsabschnitts werden die drei genannten Schritte in umgekehrter Reihenfolge in entgegengesetzter Richtung ausgeführt. Das heißt, zuerst wird der Erdungsschalter geöffnet, anschließend wird der Trennschalter geschlossen und schlussendlich werden die Vakuumröhren in eine geschlossene Schalterstellung überführt.

Erdungsschalter sind üblicherweise für einen Handbetrieb und für einen Motorbetrieb ausgelegt. Im Handbetrieb kann der Erdungsschalter per Hand zwischen der geschlossenen und der geöffneten Schalterposition umgeschaltet werden, im Motorbetrieb kann dies, insbesondere automatisch und/oder aus der Ferne ausgelöst, durch einen Hilfsmotor erfolgen. Meistens sind beide Betriebsweisen vorgesehen, wobei eine Schutzschaltung vorgesehen ist, die einen Motorbetrieb unterbindet, wenn eine Bedieneinheit des Erdungsschalterantriebs für einen Handbetrieb zugänglich gemacht wird.

Da Arbeiten an einem Leitungsabschnitt nur dann erfolgen dürfen, wenn der Erdungsschalter geschlossen ist, ist es wünschenswert, den Schaltzustand des Erdungsschalters dem Wartungspersonal anzuzeigen.

Es ist Aufgabe der Erfindung, eine Bedieneinheit für einen Erdungsschalterantrieb anzugeben, welche einen Handbetrieb des Erdungsschalters erlaubt und platzsparend und preisgünstig herzustellen ist. Es ist außerdem Aufgabe der Erfindung, eine verbesserte luftisolierte Schaltanlage anzugeben, die eine hohe Arbeitssicherheit bietet. Die Patentdokumente AT 271 612B, DE 299 04 233 U1, EP 2 787 519 A1 und DE 90 14 832 U1 zeigen vorbekannte Bedieneinheiten für Funktionseinheiten von Mittelspannungsschaltanlagen. WO2008/087723 zeigt eine bekannte Anzeige für einen Erdungsschalter.

Zusammenfassung der Erfindung Diese Aufgaben werden gelöst durch eine Bedieneinheit für einen Erdungsschalterantrieb gemäß Anspruch 1. Bevorzugte Ausführungsformen der Erfindung sind Gegenstand der Unteransprüche.

Die Bedieneinheit für einen Erdungsschalterantrieb einer luftisolierten Schaltanlage der Erfindung weist wenigstens eine in einem Lager drehbar gelagerte Welle, welche an einem ersten Ende eine Steckbuchse für eine handbedienbare Kurbel und an einem zweiten Ende einen Exzenter für die Übertragung einer Drehbewegung der Welle an den Erdungsschalterantrieb besitzt, auf. Erfindungsgemäß weist die Welle außerdem wenigstens einen Pin auf, der sich radial von der Welle weg erstreckt. Außerdem weist die Bedieneinheit einen ersten Anschlag und einen zweiten Anschlag für den wenigstens einen Pin auf. Dabei sind der erste Anschlag und der zweite Anschlag relativ zu der Welle dergestalt angeordnet, dass die Welle zwischen einer ersten Wellenposition, in der der wenigstens eine Pin an dem ersten Anschlag anschlägt, und einer zweiten Wellenposition, in der der wenigstens eine Pin an dem zweiten Anschlag anschlägt, drehbar ist.

Der wenigstens eine Pin und die zwei Anschläge erlauben eine einfache Definition von jeweiligen Endpositionen der Welle (die ersten und zweiten Wellenpositionen), so dass die Welle beziehungsweise die mit der Welle verbundene handbedienbare Kurbel nur zwischen den Endpositionen gedreht werden kann. Dabei entspricht jede Endposition einer Schalterstellung des Erdungsschalters. Dadurch, dass die Endpositionen durch den an der Welle der Bedieneinheit angeordneten wenigstens einen Pin definiert werden, kann ein besonders geringer Bauraum der Bedieneinheit erreicht werden.

Erfindungsgemäß weist die Bedieneinheit einen Träger für wenigstens einen Zustandsindikator auf, wobei der Träger relativ zu der Welle dergestalt angeordnet ist, dass der Träger von dem wenigstens einen Pin in der ersten Wellenposition in einer ersten Indikatorposition gehalten und dass der Träger von dem wenigstens einen Pin in der zweiten Wellenposition in einer zweiten Indikatorposition gehalten wird. Das heißt, der Pin oder die Pins der Welle dienen bei solchen Ausführungsformen der Erfindung neben der Definition der Endpositionen der Welle zusätzlich auch für das Bewegen eines mechanischen Zustandsindikators. Ein solcher Zustandsindikator ist gegenüber anderen Anzeigeformen wie Licht oder Ton vorteilhaft, weil er auch bei Zusammenbrechen einer Hilfsspannungsversorgung für den Betrieb eines solchen nicht-mechanischen Zustandsindikators zuverlässig funktioniert. Ausführungsformen der erfindungsgemäßen Bedieneinheit mit einem solchen Träger für den Zustandsindikator besitzen ebenfalls den Vorteil, dass die Funktionalität der Zustandsanzeige bei geringem Bauvolumen verwirklicht werden kann.

Vorzugsweise ist wenigstens einer von erstem und zweitem Anschlag als Schlitz ausgebildet, der relativ zu der Welle dergestalt angeordnet ist, dass der wenigstens eine Pin in einer zwischen der ersten Wellenposition und der zweiten Wellenposition liegenden Zwischenwellenposition frei in dem Schlitz beweglich ist und in der ersten oder zweiten Wellenposition an einem Ende des Schlitzes anschlägt. Dabei können beide Anschläge als jeweilige Schlitze ausgebildet sein, es ist aber auch möglich, die Anschläge als entgegengesetzte Enden eines einzigen Schlitzes auszubilden. Bei Verwendung von genau einem Pin können die Schlitze beziehungsweise die entgegengesetzten Enden des einzigen Schlitzes auf einander gegenüberliegenden Seiten der Welle angeordnet sein.

Besonders bevorzugt ist der Schlitz oder sind die Schlitze in einem ebenen Abschnitt eines Bleches angeordnet. Wird die Welle gedreht, taucht der wenigstens eine Pin in den Schlitz ein und ragt bei der weiteren Drehung so weit in den Schlitz hinein, dass er schließlich an seinem Ende anschlägt. Ein solches Blech lässt sich kostengünstig, beispielsweise durch Stanzen, herstellen und benötigt sehr wenig Raum. Beispielsweise kann es sich bei dem Blech um einen Teil eines Gehäuses der Bedieneinheit oder einer Seitenwand eines Abteils der luftisolierten Schaltanlage handeln.

Vorzugsweise umfasst der wenigstens eine Pin einen ersten Pin und einen zweiten Pin, die sich radial von der Welle weg erstrecken und Pin entlang einer Längsrichtung der Welle zueinander versetzt angeordnet sind. Die Verwendung von zwei Pins gewährt eine größere Freiheit bei der Anordnung der zwei Anschläge und somit bei der Definition der beiden Endpositionen der Welle. Die Anschläge können dabei insbesondere so angeordnet sein, dass in der ersten Wellenposition der zweite Pin frei ist, also an keinem Anschlag anschlägt, und in der zweiten Wellenposition der erste Pin frei ist.

Ausführungsformen mit zwei derart versetzten Pins sind insbesondere in Kombination mit der Verwendung von Schlitzen für die Anschläge der Pins vorteilhaft, weil auf diese Weise auch die Schlitze gegeneinander versetzt angeordnet sein können, was eine größere Freiheit bei der Definition der Wellenpositionen erlaubt, in denen einer der Pins in dem jeweils zugeordneten Schlitz anschlägt. Zudem wird es möglich, die Anschläge auf derselben Seite der Welle anzuordnen, wodurch zusätzlich Bauraum eingespart werden kann. Beispielsweise kann, wie oben erläutert, ein ebener Abschnitt eines Bleches mit jeweiligen Schlitzen für die beiden Anschläge verwendet werden.

Ein Drehwinkel zwischen der ersten Wellenposition und der zweiten Wellenposition kann wenigstens näherungsweise 180 Grad betragen. Über den an der Welle angeordneten Exzenter kann auf diese Weise ein maximal möglicher Hub verwirklicht werden, um den Erdungsschalter zwischen seinen geschlossenen und offenen Schalterzuständen umzuschalten.

Vorzugsweise ist der Träger federnd gelagert. Der Träger kann dabei dergestalt federnd gelagert sein, dass er ohne Krafteinwirkung durch den wenigstens einen Pin in einer zwischen der ersten Indikatorposition und der zweiten Indikatorposition befindlichen Zwischenindikatorposition angeordnet ist. Beispielsweise kann der Träger durch zwei Federelemente wie Spiralfedern gehalten werden, die Federkräfte mit einander entgegengesetzten Kraftkomponenten besitzen. Die Zwischenindikatorposition ist insbesondere bei der Verwendung von zwei Pins vorteilhaft, weil die Zwischenindikatorposition so gewählt werden kann, dass abhängig von einem Drehsinn der Welle ein jeweiliger Eingriff eines der beiden Pins in den Träger erfolgen kann, um den Träger aus der Zwischenindikatorposition zu bewegen.

Die Bedieneinheit kann mit einer Blende ausgestattet sein, welche ein Fenster aufweist. Das Fenster ist dabei relativ zu dem Träger dergestalt angeordnet, dass in der ersten Indikatorposition der wenigstens eine Zustandsindikator durch das Fenster wahrnehmbar ist und dass in der zweiten Indikatorposition der wenigstens eine Zustandsindikator nicht durch das Fenster wahrnehmbar ist. Weist der Träger zwei Zustandsindikatoren auf, kann ein jeweiliger Zustandsindikator der beiden Zustandsindikatoren in einer jeweils zugeordneten Indikatorposition der beiden Indikatorpositionen durch das Fenster wahrnehmbar sein. Beispielsweise kann der Träger hinter dem Fenster zwischen den beiden Indikatorpositionen lateral verschoben werden.

Bei einer Kombination der Ausführungsformen mit in der Zwischenindikatorposition federnd gelagerten Träger beziehungsweise mit Fenster ist das Fenster vorzugsweise dergestalt relativ zu dem Träger angeordnet, dass der Zustandsindikator oder die Zustandsindikatoren in der Zwischenindikatorposition nicht oder nicht vollständig durch das Fenster wahrnehmbar sind.

Bei allen Ausführungsformen mit einem Träger für einen Zustandsindikator ist der Träger vorzugsweise aus einem Blech gefertigt, dass einen oder mehrere ebene Abschnitte aufweist. Besonders bevorzugt sind erfindungsgemäße Bedieneinheiten, bei denen sowohl die Anschläge als auch der Träger aus solchen Blechen gefertigt sind, wobei der jeweilige ebene Abschnitt mit den als Schlitze ausgeführten Anschlägen beziehungsweise des Trägers parallel zueinander angeordnet sind. Beispielsweise kann der Träger einen oder mehrere Schlitze aufweisen, in die der wenigstens eine Pin eingreifen kann, um den Träger zwischen den Indikatorpositionen zu bewegen. Die Schlitze des Trägers können sich bei paralleler Anordnung von Träger und Anschlägen ganz oder teilweise mit den als Schlitzen ausgeführten Anschlägen überlagern.

Ein zweiter Aspekt der Erfindung führt eine luftisolierte Schaltanlage mit einem Erdungsschalter, einem Erdungsschalterantrieb für das Antreiben des Erdungsschalters und einer Bedieneinheit für den Erdungsschalterantrieb ein. Erfindungsgemäß ist die Bedieneinheit gemäß dem ersten Erfindungsaspekt ausgebildet.

### Kurzbeschreibung der Figuren

Die Erfindung wird nachfolgend anhand von Abbildungen von Ausführungsbeispielen näher erläutert. Es zeigen:
Figur 1 eine erste seitliche Ansicht eines Ausführungsbeispiels einer erfindungsgemäßen Bedieneinheit in einer geöffneten Schalterstellung des Erdungsschalters;
Figur 2 eine zweite seitliche Ansicht des Ausführungsbeispiels von Figur 1 in einer geschlossenen Schalterstellung des Erdungsschalters;
Figur 3 eine Detailansicht des Ausführungsbeispiels der Figuren 1 und 2 in einer zwischen der geöffneten und der geschlossenen Schalterstellung des Erdungsschalters; und
Figur 4 eine gegenüber den Figuren 1 bis 3 rückwärtige seitliche Ansicht des Ausführungsbeispiels.

### Ausführliche Figurenbeschreibung

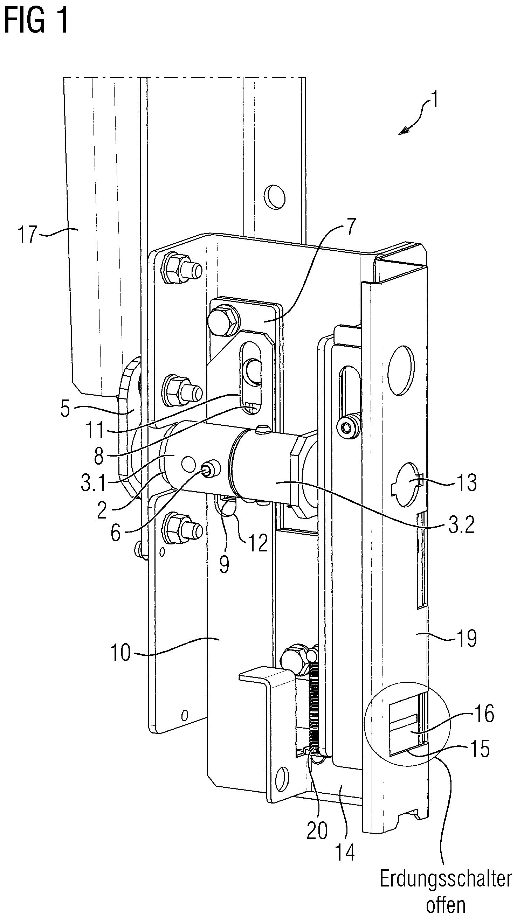

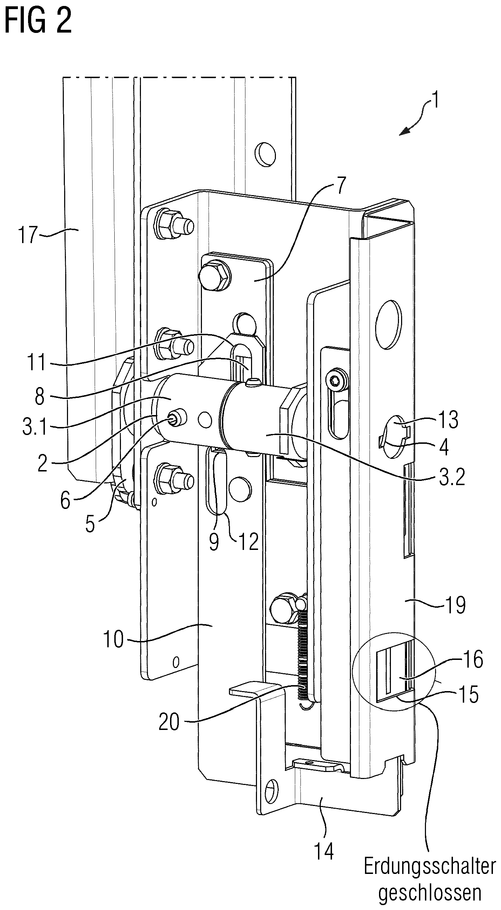

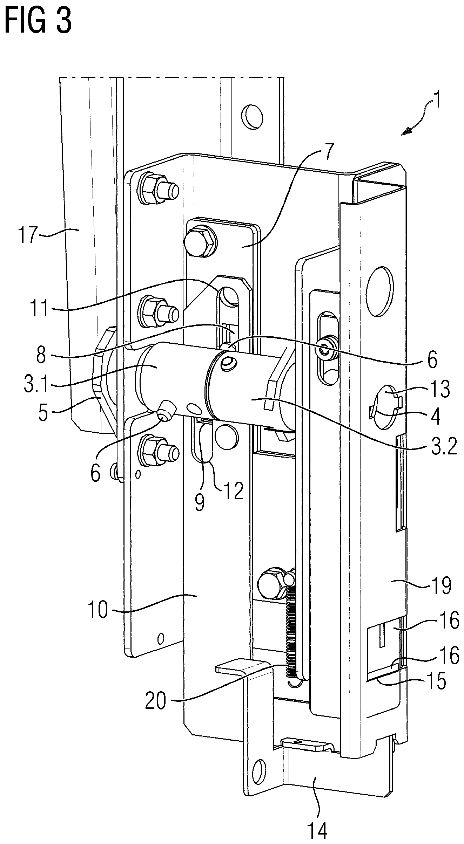

Figur 1 zeigt eine erste seitliche Ansicht eines Ausführungsbeispiels einer erfindungsgemäßen Bedieneinheit 1 in einer geöffneten Schalterstellung des Erdungsschalters. Die Bedieneinheit 1 weist eine Welle auf, die vorliegend vorteilhaft aber im Rahmen der Erfindung nicht zwingend zweiteilig aus einem ersten Wellenabschnitt 3.1 und einem zweiten Wellenabschnitt 3.2 zusammengesetzt ist. Der erste Wellenabschnitt 3.1 ist dabei mit einem Exzenter 5 versehen, der der Übertragung der Drehbewegung der Welle an einen Erdungsschalterantrieb 17 dient. Der zweite Wellenabschnitt 3.2 weist an seinem freien Ende eine Steckbuchse 4 auf (siehe Figuren 2 und 3), die eine handbedienbare Kurbel zum Drehen der Welle aufnehmen kann. Die zweiteilige Ausführung der Welle ist vorteilhaft, da sich die Steckbuchse 4 einfacher und kostengünstiger in einem separaten Teil fertigen lässt, das anschließend mit dem anderen Wellenabschnitt verbunden wird.

Die Steckbuchse 4 ist in Figur 1 nicht zu erkennen, da ein für das Einstecken der Kurbel vorgesehenes Einsteckauge 13 durch einen vertikal verschiebbaren Verschluss 14 verschlossen ist. Der Verschluss 14 wird in dem gezeigten Ausführungsbeispiel lediglich beispielhaft durch eine Rückstellfeder 20 in eine das Einsteckauge 13 verschließende Position gezogen und kann durch Wartungspersonal gegen die Federkraft der Rückstellfeder 20 mittels eines Schiebegriffes oder dergleichen verschoben werden, um das Einsteckauge 13 zu öffnen.

Der Verschluss 14 dient dabei der Absicherung von Wartungspersonal. Wird der Verschluss 14 verschoben, um eine Kurbel in das Einsteckauge 13 einführen zu können, löst der Verschluss 14 einen Detektor (nicht dargestellt) aus, der einen Motorbetrieb des Erdungsschalters verhindert. Andernfalls könnte bei eingesteckter Kurbel ein Motorbetrieb erfolgen, wodurch die Kurbel mit großer Kraft motorbewegt würde, was eine Verletzung des Wartungspersonals zur Folge haben könnte.

Erfindungsgemäß besitzt die Welle 3.1, 3.2 wenigstens einen Pin 6. In dem in den Figuren dargestellten Ausführungsbeispiel besitzt die Welle 3.1, 3.2 zwei solche Pins, die sich radial von der Welle weg erstrecken, von denen in Figur 1 jedoch nur ein Pin zu sehen ist, da der andere sich auf der vom Betrachter abgewandten Seite der Welle 3.1, 3.2 befindet.

Ein Blech 7 ist fest in der Bedieneinheit 1 montiert und weist Anschläge 8 und 9 für die Pins 6 auf, die vorliegend als Schlitze ausgeführt sind. Jedem der Pins 6 ist ein jeweiliger Anschlag 8 oder 9 zugeordnet. Ein Pin 6 taucht in der Drehbewegung der Welle 3.1, 3.2 in den zugeordneten Schlitz ein, bis er bei weiterer Drehung an einem Ende des Schlitzes anschlägt und somit die Welle 3.1, 3.2 in dieser Drehrichtung nicht weiterbewegt werden kann. Bei Drehung in die entgegengesetzte Drehrichtung schwenkt der Pin aus seinem Schlitz heraus und der andere Pin taucht in dem ihm zugeordneten Schlitz ein, bis er wiederum an dessen Ende anschlägt. Auf diese Weise wird die Drehung der Welle 3.1, 3.2 erfindungsgemäß in einem einfachen und platzsparenden Aufbau unter Verwendung preisgünstig herzustellender Bauteile zwischen zwei Wellenpositionen, die den jeweiligen Schalterzuständen des Erdungsschalters entsprechen, eingeschränkt.

Das in den Figuren gezeigte bevorzugte Ausführungsbeispiel der Erfindung besitzt zudem einen Träger 10, der aus Blech gefertigt sein kann. Der Träger 10 ist mit wenigstens einem Zustandsindikator 16 versehen. Im gezeigten Ausführungsbeispiel sind jeweils ein Zustandsindikator 16 für den geschlossenen und den geöffneten Schalterzustand des Erdungsschalters vorgesehen, wobei in Figur 1 der Zustandsindikator 16 für den geöffneten Schalterzustand durch ein Fenster 15 einer Blende 19, die auch das Einsteckauge 13 umfasst, zu erkennen ist.

Der Träger 10 für den wenigstens einen Zustandsindikator 16 ist im gezeigten Ausführungsbeispiel zwischen der Welle 3.1, 3.2 und dem Blech 7 mit den Anschlägen 8, 9 angeordnet und weist aus diesem Grund Durchgriffe 11 und 12 auf, durch die die Pins 6 in die als Schlitze ausgeführten Anschläge des Blechs 7 eintauchen können. Wird die Welle 3.1, 3.2 gedreht, um den Erdungsschalter von einem Schalterzustand in den anderen zu bewegen, greift der jeweilige Pin 6 in der bereits beschriebenen Weise durch den jeweiligen Durchgriff durch. Dabei bewegt der Pin 6 jedoch auch den Träger 10, sobald er dessen Ende erreicht und der Pin 6 so in Kontakt mit dem Träger 10 gerät. Der Träger 10 wird dadurch in einer der jeweiligen Drehrichtung der Welle 3.1, 3.2 entsprechenden vertikalen Richtung verschoben, wodurch der auf dem Träger 10 angeordnete wenigstens eine Zustandsindikator 16 entsprechend gegenüber dem Fenster 15 verschoben wird. Abhängig von der Wellenposition der Welle 3.1, 3.2 wird der wenigstens eine Zustandsindikator 16 beziehungsweise ein jeweiliger der zwei im Ausführungsbeispiel vorhandenen Zustandsindikatoren dergestalt relativ zu dem Fenster 15 positioniert, dass dieser von außen wahrnehmbar wird. Die hierdurch realisierte Anzeige des Schalterzustandes des Erdungsschalters funktioniert auch bei Störfällen wie dem Ausfalle von Hilfsspannungsversorgungen usw. zuverlässig, wodurch Wartungspersonal, das Arbeiten an der Schaltanlage vornehmen soll, abgesichert wird.

Figur 2 zeigt eine zweite seitliche Ansicht des Ausführungsbeispiels von Figur 1 in einer geschlossenen Schalterstellung des Erdungsschalters. Im Vergleich mit der Figur 1 ist zu erkennen, dass der Verschluss 14 entgegen der Federkraft der Rückstellfeder 20 vertikal nach unten verschoben ist, so dass das Einsteckauge 13 geöffnet und die Steckbuchse 4 erkennbar ist. Außerdem ist zu erkennen, dass nun der aus Sicht des Wartungspersonals hintere Pin 6 zu sehen ist, der vordere Pin sich nun also auf der abgewandten Seite der Welle 3.1, 3.2 befindet. Entsprechend der geänderten Wellenposition ist auch der Exzenter 5 gegenüber der Figur 1 verdreht und der Erdungsschalterantrieb 17 gegenüber der Figur 1 vertikal verschoben. Der Träger 10 ist durch die Einwirkung des nun hinter der Welle liegenden Pins 6 nach unten verschoben. Dementsprechend wird der andere Zustandsindikator 16, dem geänderten Schalterzustand des Erdungsschalters entsprechend, durch das Fenster 15 der Blende 19 wahrnehmbar.

Figur 3 zeigt eine Detailansicht des Ausführungsbeispiels der Figuren 1 und 2 in einer zwischen der geöffneten und der geschlossenen Schalterstellung des Erdungsschalters. Aufgrund der Position der Welle 3.1, 3.2 sind in der Figur 3 beide Pins 6 gleichzeitig zu erkennen. Die Zwischenposition der Welle 3.1, 3.2 wirkt sich auch entsprechend auf die Positionen des Exzenters 5 und des Erdungsschalterantriebs 17 aus. Im Vergleich der Figuren wird erkennbar, dass der Träger 10 sich ebenfalls in einer Zwischenposition befindet, weil nun keiner der Pins 6 in die Durchgriffe 11, 12 des Trägers 10 eingreift. Dementsprechend sind die beiden auf dem Träger 10 angeordneten Zustandsindikatoren 16 nicht beziehungsweise nicht vollständig in dem Fenster 15 wahrnehmbar. Da im Erdungsschalter beziehungsweise dessen Antrieb üblicherweise eine bistabile Kippstufe, beispielsweise mit zwei einander entgegenwirkenden Federn, vorgesehen wird, verharrt der Erdungsschalter nicht in einer solchen Zwischenposition, sondern wird in einen seiner beiden Schalterzustände kippen. Dementsprechend wird auch im Fenster 15 in stabilem Zustand immer nur ein Zustandsindikator 16 zu sehen sein.

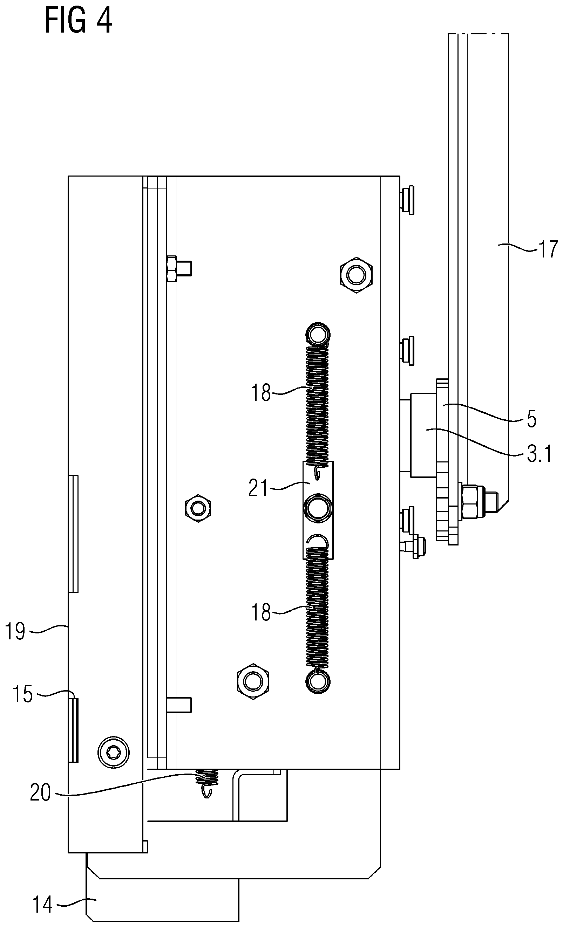

Figur 4 zeigt eine gegenüber den Figuren 1 bis 3 rückwärtige seitliche Ansicht des Ausführungsbeispiels. Zwei einander entgegenwirkende Spiralfedern 18 sind durch eine Aussparung 21 im Blech 7 mit dem in der Betrachtungsrichtung von Figur 4 auf der abgewandten Seite angeordneten Träger 10 verbunden und lagern diesen auf diese Weise federnd. Anstelle von Spiralfedern 18 können selbstredend andere Mechanismen verwendet werden, die eine federnde Lagerung erlauben. Durch die Wirkung der Spiralfedern 18 wird der Träger 10 in einer Zwischenposition gehalten, wenn keiner der Pins 6 auf den Träger 10 eingreift. Die Zwischenposition ist so gewählt, dass beide Pins 6 des gezeigten Ausführungsbeispiels durch den jeweiligen Durchgriff 11, 12 in ihren jeweils zugeordneten Schlitz mit den Anschlägen 8, 9 eintauchen, in Kontakt mit dem Träger 10 treten und diesen vertikal verschieben können, bis die weitere Bewegung des jeweiligen Pins 6 und damit der Welle 3.1, 3.2 schließlich durch den jeweiligen Anschlag 8,9 unterbunden und der Träger 10 eine Position einnimmt, in der einer der Zustandsindikatoren 16 durch das Fenster 15 wahrnehmbar wird.

Die Bedieneinheit der Erfindung bietet den Vorteil, dass sie unter Verwendung von kostengünstigen Bauteilen hergestellt werden und die gewünschte Funktionalität auf geringem Bauraum zur Verfügung stellen kann.

Die Erfindung wurde unter Bezugnahme auf ein bevorzugtes Ausführungsbeispiel näher erläutert. Der Fachmann kann weitere Ausführungsformen der Erfindung auffinden, indem er von dem erläuterten Ausführungsbeispiel abweicht. Das Ausführungsbeispiel soll nicht als den Schutzbereich der Erfindung beschränkend aufgefasst werden, der allein durch die nachfolgenden Ansprüche definiert wird.

### Bezugszeichenliste

- 1: Bedieneinheit
- 2: Lager
- 3.1: Welle (erster Wellenabschnitt)
- 3.2: Welle (zweiter Wellenabschnitt)
- 4: Steckbuchse
- 5: Exzenter
- 6: Pin
- 7: Blech
- 8: Anschlag
- 9: Anschlag
- 10: Träger
- 11: Durchgriff
- 12: Durchgriff
- 13: Einsteckauge
- 14: Verschluss
- 15: Fenster
- 16: Zustandsindikator
- 17: Erdungsschalterantrieb
- 18: Spiralfeder
- 19: Blende
- 20: Rückstellfeder
- 21: Aussparung

## Patentansprüche

1. Eine Bedieneinheit (1) für einen Erdungsschalterantrieb (17) einer luftisolierten Schaltanlage, die Bedieneinheit (1) wenigstens aufweisend eine in einem Lager (2) drehbar gelagerte Welle (3.1, 3.2), welche an einem ersten Ende eine Steckbuchse (4) für eine handbedienbare Kurbel und an einem zweiten Ende einen Exzenter (5) für die Übertragung einer Drehbewegung der Welle (3.1, 3.2) an den Erdungsschalterantrieb (17) aufweist, wobei die Welle (3.1, 3.2) außerdem wenigstens einen Pin (6) aufweist, der sich radial von der Welle (3.1, 3.2) weg erstreckt, und dass die Bedieneinheit (1) einen ersten Anschlag (8) und einen zweiten Anschlag (9) für den wenigstens einen Pin (6) aufweist, wobei der erste Anschlag (8) und der zweite Anschlag (9) relativ zu der Welle (3.1, 3.2) dergestalt angeordnet sind, dass die Welle (3.1, 3.2) zwischen einer ersten Wellenposition, in der der der wenigstens eine Pin (6) an dem ersten Anschlag (8) anschlägt, und einer zweiten Wellenposition, in der der wenigstens eine Pin (6) an dem zweiten Anschlag (9) anschlägt, drehbar ist, **gekennzeichnet durch** einen Träger (10) für wenigstens einen Zustandsindikator (16), wobei der Träger (10) relativ zu der Welle (3.1, 3.2) dergestalt angeordnet ist, dass der Träger (10) von dem wenigstens einen Pin (6) in der ersten Wellenposition in einer ersten Indikatorposition gehalten und dass der Träger (10) von dem wenigstens einen Pin (6) in der zweiten Wellenposition in einer zweiten Indikatorposition gehalten wird.

2. Die Bedieneinheit (1) des vorhergehenden Anspruchs, bei der wenigstens einer von erstem und zweitem Anschlag (8, 9) als Schlitz ausgebildet ist, der relativ zu der Welle (3.1, 3.2) dergestalt angeordnet ist, dass der wenigstens eine Pin (6) in einer zwischen der ersten Wellenposition und der zweiten Wellenposition liegenden Zwischenwellenposition frei in dem Schlitz beweglich ist und in der ersten oder zweiten Wellenposition an einem Ende des Schlitzes anschlägt.

3. Die Bedieneinheit (1) des vorhergehenden Anspruchs, bei der der Schlitz in einem ebenen Abschnitt eines Bleches (7) angeordnet ist.

4. Die Bedieneinheit (1) eines der vorhergehenden Ansprüche, bei dem der wenigstens eine Pin (6) einen ersten Pin und einen zweiten Pin umfasst, die sich radial von der Welle (3.1, 3.2) weg erstrecken und entlang einer Längsrichtung der Welle (3.1, 3.2) zueinander versetzt angeordnet sind.

5. Die Bedieneinheit (1) eines der vorhergehenden Ansprüche, bei der ein Drehwinkel zwischen der ersten Wellenposition und der zweiten Wellenposition wenigstens näherungsweise 180 Grad beträgt.

6. Die Bedieneinheit (1) eines der vorhergehenden Ansprüche, bei dem der Träger (10) federnd gelagert ist.

7. Die Bedieneinheit (1) des vorhergehenden Anspruchs, bei dem der Träger (10) ohne Krafteinwirkung durch den wenigstens einen Pin (6) in einer zwischen der ersten Indikatorposition und der zweiten Indikatorposition befindlichen Zwischenindikatorposition angeordnet ist.

8. Die Bedieneinheit (1) eines der vorhergehenden Ansprüche, mit einer Blende (19), welche ein Fenster (15) aufweist, welches relativ zu dem Träger (10) dergestalt angeordnet ist, dass in der ersten Indikatorposition der wenigstens eine Zustandsindikator (16) durch das Fenster (15) wahrnehmbar ist und dass in der zweiten Indikatorposition der wenigstens eine Zustandsindikator (16) nicht durch das Fenster (15) wahrnehmbar ist.

9. Eine luftisolierte Schaltanlage mit einem Erdungsschalter, einem Erdungsschalterantrieb (17) für das Antreiben des Erdungsschalters und einer Bedieneinheit (1) für den Erdungsschalterantrieb (17), wobei die Bedieneinheit (1) gemäß einem der vorhergehenden Ansprüche ausgebildet ist.

## Claims

1. Operating unit (1) for an earthing switch drive (17) of air-insulated switchgear, the operating unit (1) at least having a shaft (3.1, 3.2) which is rotatably mounted in a bearing (2) and has a socket (4) for a manually operable crank at a first end and an eccentric (5) at a second end for the transmission of a rotational movement of the shaft (3.1, 3.2) to the earthing switch drive (17), wherein the shaft (3.1, 3.2) additionally has at least one pin (6) which projects radially away from the shaft (3.1, 3.2), and wherein the operating unit (1) has a first stop (8) and a second stop (9) for the at least one pin (6), wherein the first stop (8) and the second stop (9) are arranged relative to the shaft (3.1, 3.2) in such a way that the shaft (3.1, 3.2) is rotatable between a first shaft position, in which the at least one pin (6) strikes the first stop (8), and a second shaft position, in which the at least one pin (6) strikes the second shaft (9), **characterized by** a carrier (10) for at least one status indicator (16), wherein the carrier (10) is arranged relative to the shaft (3.1, 3.2) in such a way that in a first indicator position the carrier (10) is held by the at least one pin (6) in the first shaft position and that in a second indicator position the carrier (10) is held by the at least one pin (6) in the second shaft position.

2. Operating unit (1) of the preceding claim, in which at least one of the first and second stop (8, 9) is formed as a slot, which is arranged relative to the shaft (3.1, 3.2) in such a way that, in an intermediate shaft position located between the first shaft position and the second shaft position, the at least one pin (6) is freely movable in the slot and, in the first or second shaft position, strikes an end of the slot.

3. Operating unit (1) of the preceding claim, in which the slot is arranged in a flat portion of a metal sheet (7).

4. Operating unit (1) of one of the preceding claims, in which the at least one pin (6) comprises a first pin and a second pin, which extend radially away from the shaft (3.1, 3.2) and are arranged offset from each other along a longitudinal direction of the shaft (3.1, 3.2).

5. Operating unit (1) of one of the preceding claims, in which a rotational angle between the first shaft position and the second shaft position is at least approximately 180 degrees.

6. Operating unit (1) of one of the preceding claims, in which the carrier (10) is resiliently mounted.

7. Operating unit (1) of the preceding claim, in which the carrier (10) is arranged in an intermediate indicator position between the first indicator position and the second indicator position without the action of any force from the at least one pin (6).

8. Operating unit (1) of one of the preceding claims, having a panel (19) which has a window (15), which is arranged relative to the carrier (10) in such a way that in the first indicator position the at least one status indicator (16) can be seen through the window (15) and that in the second indicator position the at least one status indicator (16) cannot be seen through the window (15).

9. Air-insulated switchgear having an earthing switch, an earthing switch drive (17) for driving the earthing switch and an operating unit (1) for the earthing switch drive (17), wherein the operating unit (1) is designed according to one of the preceding claims.

## Revendications

1. Unité (1) de commande d'un entraînement (17) d'interrupteur de mise à la terre d'une installation de commutation isolée par de l'air, l'unité (1) de commande ayant au moins un arbre (3.1, 3.2), qui est monté tournant dans un palier (2) et qui a, à un premier bout, une prise (4) femelle pour une manivelle manoeuvrable à la main, et à un deuxième bout un excentrique (5) de transmission d'un mouvement de rotation de l'arbre (3.1, 3.2) à l'entraînement de l'interrupteur (17) à la terre, dans laquelle l'arbre (3.1, 3.2) a en outre au moins une goupille (6), qui s'étend en s'éloignant radialement de l'arbre (3.1, 3.2), et en ce que l'unité (1) de commande a une première butée (8) et une deuxième butée (9) pour la au moins une goupille (6), dans laquelle la première butée (8) et la deuxième butée (9) sont disposées par rapport à l'arbre (3.1, 3.2) de telle façon que l'arbre (3.1, 3.2) peut tourner entre une première position d'arbre, dans laquelle la au moins une goupille (6) vient en butée sur la première butée (8) et une deuxième position d'arbre, dans laquelle la au moins une goupille (6) vient en butée sur la deuxième butée (9), **caractérisée par** un support (10) d'au moins un indicateur (16) d'état, dans laquelle le support (10) est monté de telle façon par rapport à l'arbre (3.1, 3.2) que le support (10) soit maintenu par la au moins une goupille (6) dans la première position de l'arbre dans une première position de l'indicateur et que le support (10) soit maintenu par la au moins une goupille (6) dans la deuxième position d'arbre dans une deuxième position de l'indicateur.

2. Unité (1) de commande suivant la revendication précédente, dans laquelle au moins l'une de la première et de la deuxième butée (8, 9) est constituée sous la forme d'une fente, qui est disposée de telle façon par rapport à l'arbre (3.1, 3.2) que la au moins une goupille (6) soit mobile librement dans une position intermédiaire entre la première position d'arbre et la deuxième position d'arbre et vient en butée dans la première ou la deuxième position d'arbre sur une extrémité de la fente.

3. Unité (1) de commande suivant l'une des revendications précédentes, dans laquelle la fente est disposée dans une partie plane d'une tôle (7).

4. Unité (1) de commande suivant l'une des revendications précédentes, dans laquelle la au moins une goupille (6) comprend une première goupille et une deuxième goupille, qui s'étendent en s'éloignant radialement de l'arbre (3.1, 3.2) et qui sont disposées décalées l'une par rapport à l'autre suivant une direction longitudinale de l'arbre (3.1, 3.2).

5. Unité (1) de commande suivant l'une des revendications précédentes, dans laquelle un angle de rotation entre la première position d'arbre et la deuxième position d'arbre est d'au moins environ 180 degrés.

6. Unité (1) de commande suivant l'une des revendications précédentes, dans laquelle le support (10) est monté sur ressort.

7. Unité (1) de commande suivant la revendication précédente, dans laquelle le support (10) est monté, sans application d'une force par la au moins une goupille (6), dans une position intermédiaire de l'indicateur se trouvant entre la première position de l'indicateur et la deuxième position de l'indicateur.

8. Unité (1) de commande suivant l'une des revendications précédentes, comprenant un diaphragme (19), qui a une fenêtre (15), laquelle est disposée de telle façon par rapport au support (10), que dans la première position de l'indicateur, le au moins un indicateur (16) d'état est perceptible par la fenêtre (15) et que, dans la deuxième position de l'indicateur, le au moins un indicateur (16) d'état ne soit pas perceptible par la fenêtre (15) .

9. Installation de commutation à isolation par de l'air, comprenant un interrupteur de mise à la terre, un entraînement (17) d'interrupteur de mise à la terre pour l'entraînement de l'interrupteur de mise à la terre, et une unité (1) de commande de l'entraînement (17) de l'interrupteur de mise à la terre, dans laquelle l'unité (1) de commande est constituée suivant l'une des revendications précédentes.
